Europäisches Patentamt

European Patent Office

Office européen des brevets

(19)

(11) Veröffentlichungsnummer: **0 327 546**
**B1**

(12) **EUROPÄISCHE PATENTSCHRIFT**

(45) Veröffentlichungstag der Patentschrift: 27.12.90

(51) Int. Cl.⁵: **F 02 F 3/26,** F 02 B 23/06

(21) Anmeldenummer: **87906657.9**

(22) Anmeldetag: **20.10.87**

(86) Internationale Anmeldenummer:
**PCT/DE87/00469**

(87) Internationale Veröffentlichungsnummer:
**WO 88/02813 21.04.88 Gazette 88/09**

(54) Selbstzündende Brennkraftmaschine.

(30) Priorität: **20.10.86 DE 3635554**

(43) Veröffentlichungstag der Anmeldung:
**16.08.89 Patentblatt 89/33**

(45) Bekanntmachung des Hinweises auf die
Patenterteilung:
**27.12.90 Patentblatt 90/52**

(84) Benannte Vertragsstaaten:
**DE FR GB IT SE**

(56) Entgegenhaltungen:
**DE-B-1 122 325**
**GB-A-2 148 451**

(73) Patentinhaber: **Elsbett, Günter**
**Industriestrasse 14**
**D-8543 Hilpoltstein (DE)**
(73) Patentinhaber: **Elsbett, Klaus**
**Industriestrasse 14**
**D-8543 Hilpoltstein (DE)**
(73) Patentinhaber: **Elsbett, Ludwig**
**Industriestrasse 14**
**D-8543 Hilpoltstein (DE)**

(72) Erfinder: **Elsbett, Günter**
**Industriestrasse 14**
**D-8543 Hilpoltstein (DE)**
Erfinder: **Elsbett, Klaus**
**Industriestrasse 14**
**D-8543 Hilpoltstein (DE)**
Erfinder: **Elsbett, Ludwig**
**Industriestrasse 14**
**D-8543 Hilpoltstein (DE)**

EP 0 327 546 B1

**Beschreibung**

Die Erfindung betrifft eine selbstzündende Brennkraftmaschine mit einer im Kolben angeordneten rotationssymmetrischen, am Rand mit einer Ausnehmung versehenen Brennraummulde.

Aus der DE-OS 33 43 677 ist eine selbstzündende Brennkraftmaschine für flüssige Brennstoffe mit einer im Kolben angeordneten rotationssystemmetrischen Brennraummulde bekannt, in welcher die Luft einer starken Rotation ausgesetzt ist, und die den schräg von oben eingesprizten Kraftstoffstrahl in Rotation versetzt, so daß die wirkenden Zentrifugalkräfte die schwere kalte Luft nach außen drücken und das heiße Gemisch nach innen wandert. Um alle die Rotation störenden Kanten zu vermeiden, wird die Düsenschnaupe an der Brennraumöffnung durch eine angedrehte Schräge ersetzt.

Bei der Erstmontage und bei Wartungs- und Überholungsarbeiten in der Werkstatt haben sich jedoch bei diesem Vorschlag Probleme herausgestellt. Es wurden Verbiegungen der Ventilschäfte festgestellt, wenn bei der Ventileinstellung Fehler begangen wurden. Bedingt durch sehr enge Steuerzeiten und das Nichtvorhandensein von Ventiltaschen (weder im Zylinderkopf noch im Kolben) kann es vorkommen, daß der Kolben im oberen Totpunkt bei falscher Ventileinstellung die Teller der noch nicht ganz geschlossenen Ventile berührt. Bei einer Ausbildung des Kolbenbodens, wie sie in der DE-OS 33 43 677 beschrieben ist, werden in dieser Situation Kippmomente auf die Ventilteller ausgeübt, die zur Verbiegung der Ventilschäfte führen.

Des weiteren waren Wärmerisse im Bereich des Brennraummuldenrandes nicht ausgeschlossen; die vormals im Schnaupenbereich auftretenden Risse fanden sich am Brennraummuldenrand wieder.

Bei dem anmeldungsgemäßen Brennverfahren rotieren die Gase im Brennraum mit sehr hoher Geschwindigkeit, so daß bei dieser hohen Luftgeschwindigkeit der Brennraummuldenrand thermisch beeinträchtigt wird, wenn er mit den brennenden Gasen oder der hochbeschleunigten Luft beim Aus- oder Eintreten der Gase in den Brennraum in Berührung kommt.

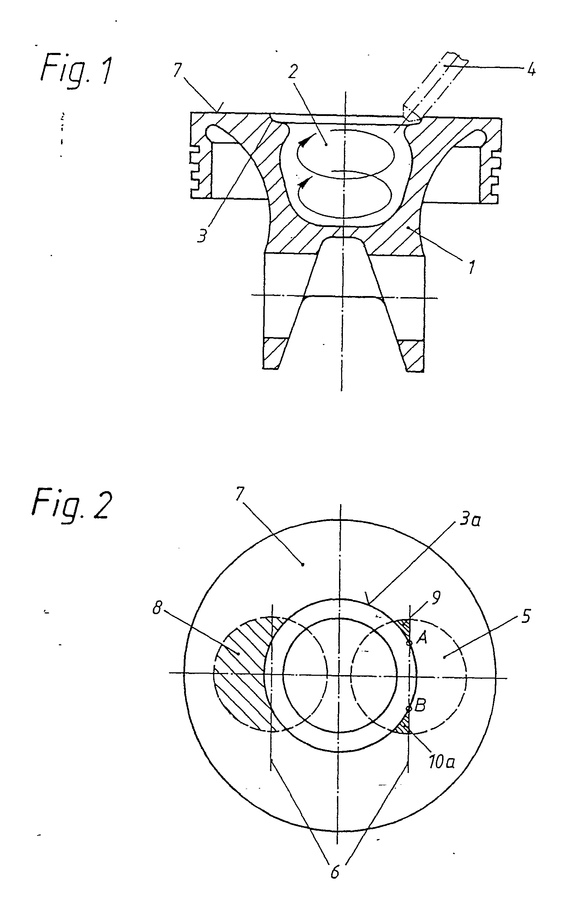

In der DE—OS 34 27 065 wird ein Kolben mit einer Brennraummulde gezeigt, deren oberen Rand mit einer Schräge versehen ist. Die Schräge und ihre Dimensionierung sind nicht Gegenstand der Anmeldung. Fig. 2 zeigt dort die Ventiltellerlage in Projektion auf die Kolbenoberfläche. Die Ventiltellergröße und die Größe der Ausnehmung sind in diesem Fall so gering, daß es zu den oben angesprochenen Problemen der Einleitung von Kippmomenten auf die Ventilteller nicht kommt.

Aufgabe der Erfindung ist nun, den oberen Rand der Brennraummulde und den Kolbenboden so auszubilden, daß auch bei großer Ausnehmung und für große Ventilteller eine Beschädigung der Ventilschäfte beim Betrieb der Brennkraftmaschine vermieden wird.

Die Lösung ergibt sich durch die erfindungsgemäße Anordnung nach Anspruch 1. Die Ausnehmung endet zum Kolbenboden hin so, daß die Ventilteller bei eventuell tangierenden Kolben noch soweit auf der ringförmigen oberen Planfläche des Kolbens aufliegen, daß keine Kippmomente auf die Ventilschäfte wirken können. D. H. das Größenverhältnis von Ventiltellern und Ausnehmung muß so abgestimmt sein, daß es den Anforderungen von Anspruch 1 (Fig. 2) genügt.

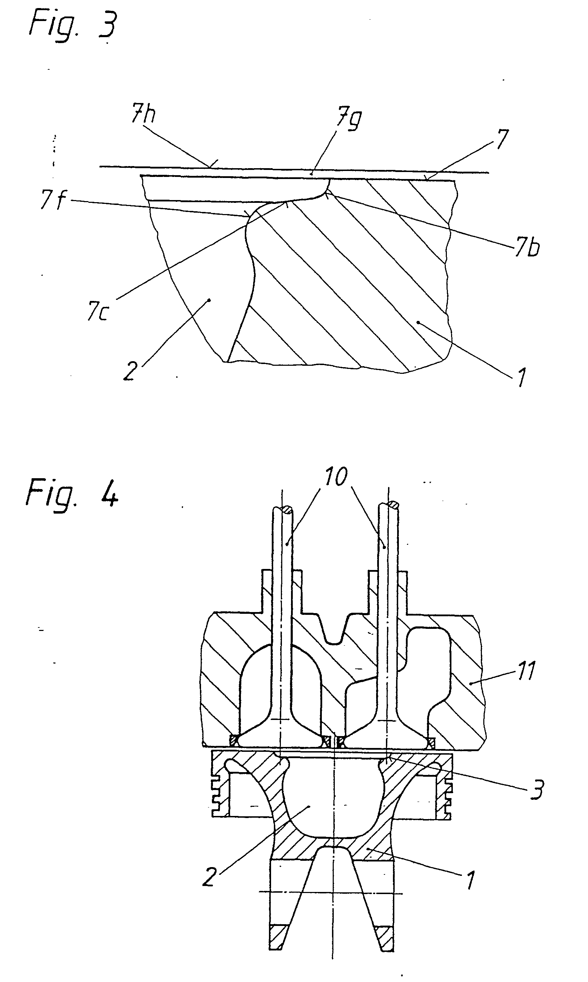

Anspruch 2 (Fig. 3) gibt eine deutliche Vergrößerung der Ausnehmung über dem Muldenrand wieder, wobei die Plattform der Ausnehmung fast parallel zur Planfläche des Kolbens ist und dadurch die Ausnehmung zum Zylinderkopf hin groß gehalten ist. Am Brennraummuldenrand wird die Ausströmgeschwindigkeit der Gase reduziert, indem die Ausnehmung zum Kolbenboden hin so vergrößert ist, daß durch diese Höhen- und Quevergrößerung eine Reduzierung der Luftgeschwindigkeit erreicht wird und somit eine thermische Überlastung des Muldenrandes gezielt verhindert werden kann. Die Größe der Ausnehmung ist den thermischen Bedingungen anzupassen.

Der Erfindungsgedanke wird anhand der folgenden Zeichnungen näher erläutert.

Fig. 1 zeigt einen Querschnitt durch einen erfindungsgemäßen Kolben, der auch die Einspritzdüse zeigt.

Fig. 2 zeigt einen Aufriß des Kolbens mit einer Projektion der Ventilteller in die Ebene der Kolbenfläche.

Fig. 3 zeigt einen vergrößerten Ausschnitt eines Querschnittes des Bereiches der erfindungsgemäßen Ausnehmung.

Fig. 4, 5 zeigen einen weiteren Querschnitt durch den Kolben mit der rotationssymmetrischen Ausnehmung, wobei die Zusammensetzung von Zylinderkopf mit Ventilen und Kolbenoberteil im oberen Totpunkt gezeigt ist.

Fig. 6 zeigt Fig. 2 in der Größenabmessung von Fig. 5 und die Lage der Ventile in Querschnitt und Projektion.

In Fig. 1 befindet sich der Kolben (1) mit Brennraummulde (2) in der oberen Totpunktlage. Die erfindungsgemäße Ausnehmung (3) am oberen Rand der Brennraummulde (2) ist so bemessen, daß die thermische Belastung des Brennraummuldenrandes (7f) vermieden ist, so daß keine Wärmerisse auftreten.

Die horizontal Ausdehnung der erfindungsgemäßen Ausnehmung ergibt sich aus Fig. 2.

Der äußere Rand der Ausnehmung (3a) und gleichzeitig der innere Rand der oberen Planfläche (7) des Kolbens (1) schneidet die Achse (6) der Ventiltellerprojektion (5) in den Punkten A und B, die innerhalb des Umfanges der Ventiltellerprojektion (5) liegen. Dadurch greift die Berührungsfläche (8) zwischen Kolben und Ventilteller mit den Teilflächen (9) und (10a) über die die Ventiltellerfläche halbierende Achse (6) hinaus. Kippmomente auf die Ventilteller und somit Beschädigungen der Ventilschäfte werden vermieden.

Eine Vergrößerung der Ausnehmung ist in Fig.

3 zu sehen. Der Gesamtraum über dem Muldenrand (7f) bis zum Zylinderkopf (7h) einschließlich des Spaltraumes (7g) bildet eine Ausnehmung, deren Größe von der Höhe von (7b) und der Plattform (7c) abhängt. Dieser Raum ist entscheidend für die Beinflussung der Luftgeschwindigkeit und Reduzierung der Austrittsgeschwindigkeit der Gase. Von der oberen Planfläche des Kolbens (7) aus verläuft die Ausnehmung zunächst annähernd senkrecht, dann konkav (7b) zu einer Plattform (7c), die annähernd parallel zu (7) ist und dann konvex (7f) in den Brennraum (2) übergeht.

Fig. 4 zeigt die Ventile (10) im Zylinderkopf (11) und den Kolben (1) mit Brennraum (2) und Ausnehmung (3) im oberen Totpunkt.

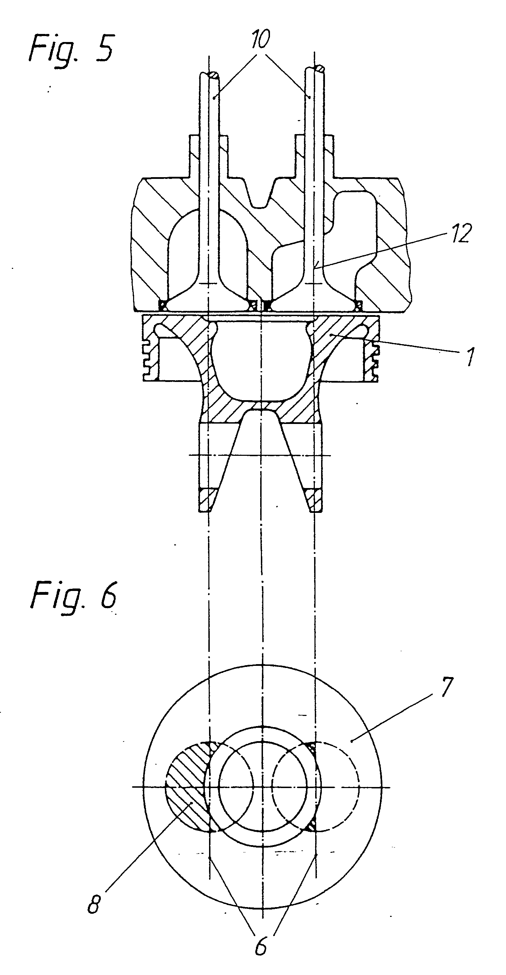

Fig. 5 und 6 sind so untereinandergezeichnet, daß die verbindenden Linien von Querschnitt und Aufriß übereinstimmen, wobei die Achse (12) der Ventile (10) im Aufriß in die Linien (6) senkrecht zur kürzesten Verbindung zur Symmetrieachse der Brennraummulde übergeht.

### Patentansprüche

1. Selbstzündende Brennkraftmaschine mit mindestens einem Zylinder, jeweils einem Kolben (1) pro Zylinder und mindestens zwei Hubventilen (10) pro Zylinder, deren Achsen senkrecht zur Planfläche des Kolbenbodens (7) verlaufen, wobei im Kolben (1) eine rotationssymmetrische Brennraummulde (2) angeordnet ist, die am Übergang zur verbleibenden den ringförmigen Planfläche des Kolbenbodens eine zum Kolbenboden (7) sich radial erweiternde Ausnehmung (3) aufweist, dadurch gekennzeichnet, daß der äußere Rand (3a) der Ausnehmung dadurch festgelegt ist, daß bei einer Projektion der Ventilteller (5) in die obere Planfläche (7) des Kolbens diejenigen Achsen durch den Mittelpunkt dieser Projektionen (6), die senkrecht zur kürzesten Verbindungslinie dieser Mittelpunkte mit der Mittelachse der Brennraummulde verlaufen, vom äußeren Rand der Ausnehmung (3a) pro Ventil zweimal innerhalb der Ventiltellerprojektion geschnitten werden (A, B).

2. Kolben (1) einer selbstzündenden Brennkraftmaschine nach Anspruch 1, dadurch gekennzeichnet, daß die Außenwand (7b) der Ausnehmung (3) die obere Planfläche des Kolbenbodens (7) annähernd senkrecht trifft und in konkavem Verlauf (7b) zu einer Plattform (7c) übergeht, die annähernd parallel zu (7) verläuft und dann konvex (7f) zum Brennraummuldenrand hinführt.

### Revendications

1. Moteur à combustion interne à ignition spontanée comportant au moins un cylindre avec un piston (1) par cylindre et au moins deux soupapes à levée (10) par cylindre, dont les axes sont perpendiculaires à la surface plane (7) de la tête du piston, ce dernier (1) comportant une chambre de combustion symétrique en rotation (2) qui, au droit de la rencontre avec la surface annulaire résiduelle de la tête de piston (7), présente un élargissement radial formant un lamage (3) caractérisé par le fait que le bord extérieur (3a) de ce lamage est disposé de telle façon que lors de la projection des plateaux de soupapes (5) sur la surface plane de la tête de piston (7) les axes (6) qui passent par les centres de ces projections et qui sont perpendiculaires respectivement à la droite joignant par le chemin le plus court chacun de ces centres à l'axe de la chambre de combustion interceptant chacun le bord extérieur du lamage (3a) en deux points (A, B) intérieurs à la projection des plateaux de soupapes.

2. Piston (1) d'un moteur à combustion interne à ignition sponta-née conforme à la revendication 1 caractérisé par le fait que la paroi extérieure (7b) du lamage (3) fait approximativement un angle drout avec la surface plane de la tête de piston (7) et qu'elle prend une forme concave (7b) pour former une plate-forme (7c) qui est approximativement parallèle à la surface (7) et qui rejoint le bord de la chambre de combustion par une forme convexe (7f).

### Claims

1. Self-igniting internal combustion engine with a minimum of one cylinder, each with one piston (1) per cylinder and a minimum of two overhead valves (10) per cylinder whose axis is perpendicular to the flat surface of the piston head (7), whereby an axially symmetrical combustion chamber (2) is located in the piston (1) such that the transition to the remaining ring-shaped surface of the piston head forms a radially enlarging recess (3) with the piston head (7) characterized in that the outer edge (3a) of the recess is determined by the projection of the valve head (5) onto the upper plane surface (7) of the piston so that the axes through the mid-points of these projections (6) are perpendicular to the shortest line connecting their mid-points with the centerline of the combustion chamber and intersect twice per valve (A, B) the outer edge of the recess (3a) within the projection of the valve head.

2. Piston (1) of a self-igniting internal combustion engine as per Claim 1, characterized in that the outer wall (7b) of the recess (3) intersects the upper flat surface of the piston head (7) approximately perpendicularly and runs concavely (7b) into a platform (7c) which runs approximately parallel to (7) and then convexly (7f) into the edge of the combustion chamber.

Fig. 1

Fig. 2

Fig. 3

Fig. 4

Fig. 5

10

12

1

Fig. 6

7

8

6